# EUROPEAN PATENT SPECIFICATION

(11) **EP 0 916 197 B1**
(45) Date of publication and mention of the grant of the patent: **20.03.2002**
(21) Application number: 97938823.8
(22) Date of filing: 14.07.1997
(51) Int. Cl.: H04B 7/26

(54) **METHOD AND SYSTEM TO SUPPLY DATA TO THE USERS OF A DECT SYSTEM**
VERFAHREN UND ANORDNUNG ZUR DATENZUTEILUNG VON BENUTZERN EINES DECT SYSTEMS
PROCEDE ET SYSTEME POUR FOURNIR DES DONNEES AUX UTILISATEURS D'UN SYSTEME DECT

(30) Priority: 26.07.1996 IT MI961590
(43) Date of publication of application: 19.05.1999
(73) Proprietor: Siemens Information and Communication Networks S.p.A., 20126 Milano (IT)
(72) Inventor: ROSINA, Giancarlo, I-20018 Sedriano (IT); SALTINI, Giorgio, I-20156 Milano (IT); DE CAMILLI, Giuseppe, I-20133 Milano (IT); PROSERPIO, Vittorio, I-22040 Garbagnate Monastero (IT)
(74) Representative: Giustini, Delio
(86) International application number: EP9703763
(87) International publication number: WO9805130

(56) References cited:
- WO-A-93/21719
- GB-A- 2 296 161
- PILGER U: "STRUKTUR DES DECT-STANDARDS" NACHRICHTENTECHNIK ELEKTRONIK, vol. 42, no. 1, 1 January 1992, pages 23-29, XP000279214

## Description

### Field of the invention

The present invention relates in general to a method for data low speed transmission in the DECT system, and more particularly relates to a method to offer data services to the users of the DECT system.

As it is already known, the cordless system, called DECT (Digital Enhanced Cordless Telephone) includes a plurality of radio fixed transreceiver stations, distributed in order to cover the concerned areas and connected to a communication network of the private type (PABX), and portable user sets which connect via radio to the fixed parts and are therefore able to communicate between them and with other fixed users connected to the public network. Connections can be of the voice type or enable data exchange occupying the equivalent of one or more voice channels.

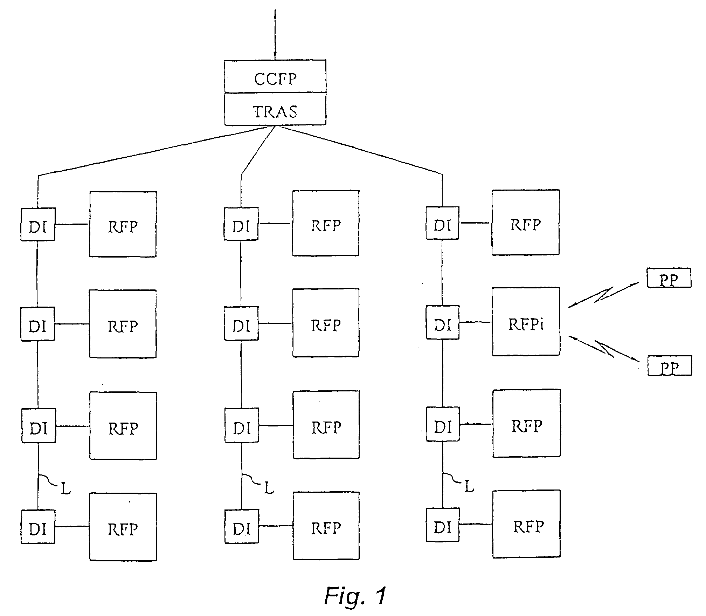

A first structure of the DECT network is outlined as an example in Figure 1.

It includes groupings of k (in the example shown in the figure k = 4) radio fixed parts RFP preferably connected to branches (in the example 3 branches) formed of connection or dorsal lines L through drop/insert devices DI. Without departing from the scope of the present invention, it results possible to star connect each RFP station to the CCFP unit, thus eliminating the above mentioned dorsals lines and of course, also drop/insert DI devices.

Each fixed part RFP can manage via radio a given number of PP (Portable Part) users, which are generally mobile ones.

The branches revert to a transcoder battery TRAS, and this last is connected to the public network PSTN (Public Switching Telephone Network) through a central control fixed part CCFP (Common Control Fixed Part), associated to a switching network or peripheral advanced module MEP.

The interface between the CCFP and the DECT network, as far as the voice signal is concerned, typically consists of 64 Kbit/s. CCFP unit is associated to a battery of transcoders TRAS performing the conversion of the PCM coding on eight bits when used on the PSTN side, in ADPCM coding (Adaptive Differential Pulse Code Modulation), on four bits when used on DECT side. In this way, two 32 Kbit/s channels are grouped on each 64 Kbit/s channel.

The 2.048 Mbit/s (bi-directional) dorsal connecting the CCFP to the different radio fixed parts RFP supports therefore 48 voice channels plus a pre-set number of synchronization and signalling channels.

The area covered by a fixed part or cell is generally rather reduced, reaching coverings even in the range of tenths or hundreds of metres of radius. Typical applications of cordless systems are encountered in industrial installations where they can substitute the laying of a cabled network, in commercial complexes or urban centres, where they can advantageously replace public telephone call boxes and others.

The telecommunication network for personal calls is of the digital type. The radio access falls under the FDMA - TDMA - TDD class.

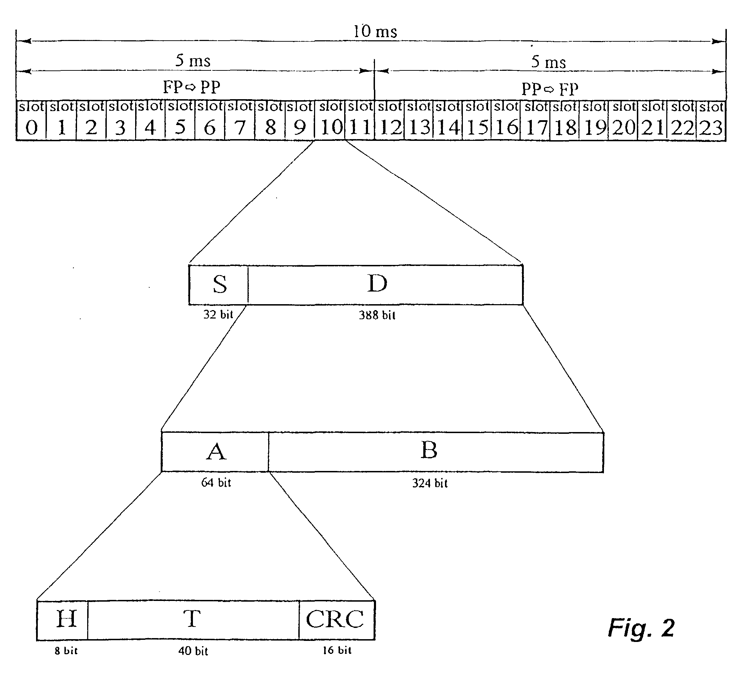

The system is of the TDD (Time Division Duplex) type since transmission and receipt do not take place at the same time. More in detail, as shown referring to figure 2, the 10 millisecond basic frame is divided into two halves: in general, during the first 5 ms, the fixed part transmits and portable sets receive (TX DECT half frame for the fixed part, and RX DECT for the portable set), and during the subsequent 5 ms, the reverse operation takes place. Each half-frame consists of 12 time slots of the full type (the system is a TDMA one, due to this reason), each of them consisting of 420 (or 424, according to the case) bits. Time slots are transmitted or received using 10 (or more) different frequencies (the system is a FDMA one, due to this reason) totalling 120 (or more) slots available to the system, which are allocated time by time in order not to create interference problems.

In the present description, the terms "data and data services" are referred to the transport of digital signals nor originated by voice, such as files, digital images, alphanumeric messages, video (moving digital images) or in general data suitable to supply multimedia services.

Though the DECT system has been conceived also for data exchange between users, its present practical implementations are oriented to the transmission of voice services between the users.

### Background art

For the supply of services offered to the users of the DECT System, solutions have been proposed not resulting satisfactory when the quantity of data to be transmitted is lower than a given extent, for instance in the range of 1-2 Kbit/sec.

Works are currently in progress for analogue modems to be used on the DECT system, likewise what happens for the users of the traditional telephone network. This method enables very poor performances in terms of bit rate available to the user, and also the use of analogue modems involves useless analogue/digital conversions to carry a digital signal on a transmission system being already digital in itself.

In practice, through said analogue modems, the signal to be transmitted by the user is converted into an analogue signal and sent as voice on the DECT system. This one, in its turn, converts the signal in the digital format to transfer the same, as it were a voice signal and sends it to the network. These useless conversions significantly deteriorate the performances which can be obtained from the system.

Solutions have also been proposed, involving the modification of DECT access equipment, or of the Radio Fixed Parts (RFP). In practice, in the solution presently under evaluation, a protected air channel is used, identified as Ip channel, where for the voice application a non protected air channel is used, identified with In channel. The channel protection is referred herein to the errors due to air transmission.

The use of the protected channel Ip appears impossible to be proposed, both in terms of efficiency and as for costs, for applications requiring a very low data flow, often mono-directional, and generally associated to a very reduced power consumption of the device generating the same.

As said above, in fact, the DECT system has been structured for the exchange of voice signals on the In channel and for data exchange on the Ip channel. However, for applications of the type specified above, where a low speed data transmission is required, the use of the above mentioned Ip channel cannot be proposed in relation to the power budget related to the use of said channel, as it shall appear more clear hereafter, and in relation to efficiency problems considered above.

In the Italian patent no. 1.285.203 in the name of the same applicant granted on 25 September 1998, it was also proposed the modification of the access profile (GAP) of the user terminal PP into a GAP++ profile capable to implement a data transmission on said unprotected In channel, usually provided for the transmission of voice signals. Even this solution, though requiring no modification of RFPs generally foreseen for the voice service to implement said data transmission, requires the installation of an additional server to establish calls to other users, therefore involving costs which do not appear to be justified when the flow of data to be transmitted has a rather poor speed and mainly for applications requiring a drastic limitation of power consumption.

There are in fact, number of systems where a low speed data exchange is requested for which the power saving problem is rather stringent. Among these systems we mention for instance data exchange/data collection systems requiring fixed or mobile low power consumption peripheral stations, with local battery supply.

The general structure of these systems foresees a given number of fixed or mobile peripheral stations, adapted to collect data through appropriate sensors, connected to a data collection station implementing the "data collection" operation, processing the same and taking possible adequate measures, such as for instance the operation of an alarm or the enabling of an actuator.

Said known systems have different limits, among which the need of wire or "conventional" radio connection to the data collection station with high plant costs, mainly due to the laying of cabling or conventional radio infrastructures.

Other limits of the known systems lie in the fact that they can be installed only in areas close to an electric power distribution network. This is due to the fact that data transmission equipment involve a power absorption such that their supply through local battery systems cannot be proposed.

WO-A-93/21 719 discloses the simultaneous incorporation of a C_{f} channel and a I channel in the B-field format of a DECT system to enable data transmitted separately on a D channel and a B channel in an ISDN system to be also transmitted simultaneously and separately in a DECT system.

GB-A-2 296 161 refers to a method of exchanging data between a fixed radio part and a portable radio part in a DECT system by inserting the information wholly or partly in frames of a protocol complying, at least in part, with the DECT standard.

### Objects of the Invention

One object of this invention is to implement a method enabling the low speed data transmission on a DECT system.

Another object is to implement a method enabling to considerably reduce the power consumption required to implement the above mentioned data transmission.

Also, a particular object of the invention is to implement an effective "data exchange/data collection" system to be used where it is not recommended the laying of cables and power availability is very reduced.

### Summary of the invention

The above mentioned objects are achieved trought the method of the present invention consisting in a method for low speed data transmission in a DECT system including at least one radio fixed part and at least one peripheral unit in which data transmission is organized in frames having pre-set duration in which a pre-set number of time slots are allocated, each of said time slots including:
a first field containing useful data for the clock and phase recovery;
a second field for the signal transmission,
a third field for payload transmission,
said method being characterized in that it transmits in a connection oriented modality (c.f.r. ETS 300 175) data in said second field, disabling the third field at the same time.

According to a further aspect the invention consists of a system for the low speed transmission of data, including at least one radio fixed part and at least one portable part, said system being characterized in that said data transmission is accomplished in accordance with the method of claim 1.

According to a further aspect the invention consists of a data exchange/data collection system adapted to collect and to exchange data emitted by fixed or mobile peripheral units and for the enabling of pre-set functions in relation to the value of a code emitted by peripheral units, said data exchange/data collection system being characterized in that said fixed or mobile peripheral units are a radio fixed part and a portable part of a DECT system and said data exchange and collection are accomplished in accordance with the method of claim 1.
The features of the present invention which are believed to be novel are set forth with particularity in the appended claims.

### Brief description of the drawings

The invention, together with further objects and advantages thereof, may be understood with reference to the following description, taken in conjuction with the accompanying drawings, and in wich:
Fig. 1, already described, shows the general architecture of a DECT system;
Fig. 2, already described, shows the frame architecture of the DECT system in fig. 1 as well as the detail of one of the 24 time slots of the full type;
Fig. 3 outlines a geographical connection system on local scale, aimed at the bi-directional transport of data and voice calls between fixed of mobile peripheral units and at least one management and control central unit;

### Detailed description of a preferred embodiments.

Making reference to Fig. 2, the structure of a DECT time slot shall be now recalled in brief The time slot includes a field provided for the synchronization data transmission and a field D provided for general data transmission.

The first field S is used in particular for the phase recovery and includes two words, in particular a first word formed of a sequence of bits having alternatively logic value one and logic value zero for the clock recovery, and a word characterized in that it has a maximum correlation capability. '

The data field includes in its turn a field A and a field B.

The field A is used for signalling purposes, that is for the transmission of the signal aiming at constructing, maintaining and abating connections.

The field B on the contrary is provided for the transmission of actual data, that is the so-called payload.

As shown in Fig. 2 as well, the field A consists in its turn of three sub-fields, the first of which is identified by H and is provided for the transport of a header H, the second one identified T or "Tail" is provided for the transport of the data content and the third one is a sub-field useful for error determination, known as CRC or cyclic redundancy code.

The header H contains a coding, expressed through three bits, identifying a respective logic channel which, in fact, is carried in the second sub-field T, that is to the sub-field relevant to the content. Finally, the CRC field has the function to highlight if the logic channel transmitted time by time is correct.

Among the logic channel carried in the content sub-field T, we can mention for instance the Qt field relevant to system data, the Pt field relevant to paging data, etc.

One of said logic channels is in particular the channel Cs which has 2 Kbit/s transmission capacity. According to the DECT standard, said Cs channel is provided for the transmission of high level signals, that is third level signals or data.

In conclusion, for the transmission of data, the conventional DECT standard foresees the presence of the following data profiles:
I) For the transmission of data in connection oriented mode (c.f.r. ETS 300 175), the use of the field B is required, that is for instance the Ip channel, with a potential transmission capacity of 24.6 Kbit/s.
II) For the transmission of data in connectionless mode (c.f.r. ETS 300 175), a field only is allowed, for instance for Cs channel transfer, with a potential transmission capacity of 2 Kbit/s.
III) Furthermore, in the case of connection oriented data transmission the use of fields A+B is always required even when, following a basic set-up operation, transmision of data is made in field A and B field does not transport valid data.

Referring to data profiles under points I) and III), the DECT system foresees a "basic set-up", characterized by the transmission of data on the field A and by the enabling of the whole slot, while another possible set-up form is the so-called "advanced set-up", characterized by data transmission on the field B and by the enabling of the whole slot.

In particular the profile III) considered above for data transmission, though foreseeing an "idle" condition for the field B, results expensive as for power consumed. In fact, the radio power is essentially coinciding with power consumed when the field B is actually employed (and therefore contains data).

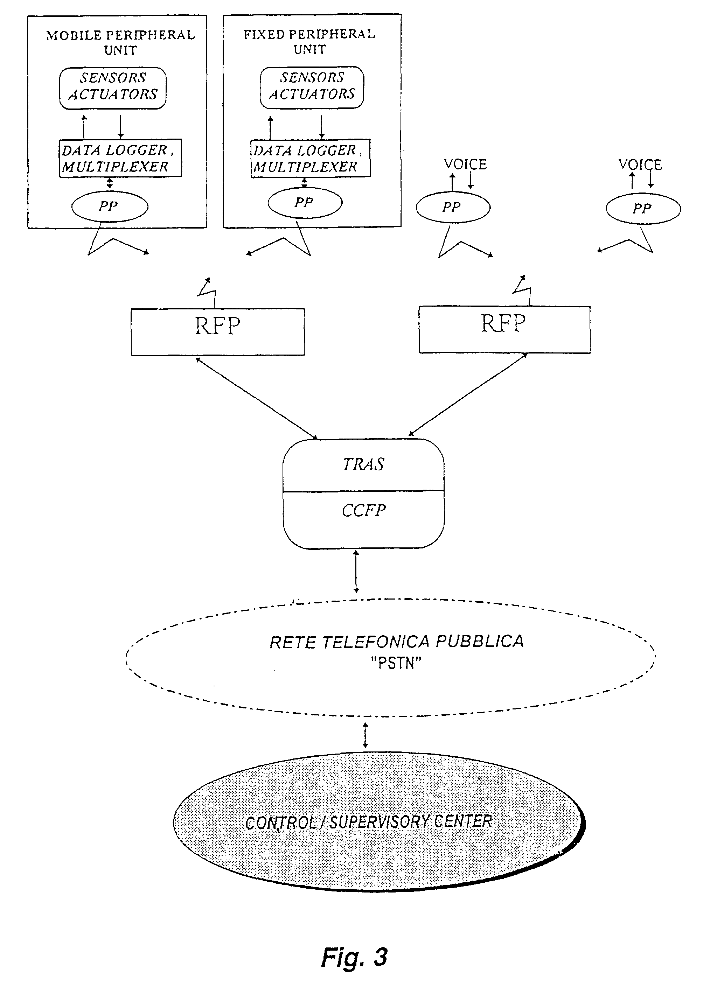

Considering that monitoring systems of the type mentioned above making reference to figure 3 operate at best when the transmission is of the connection oriented mode, it is clear that the use of the connectionless mode cannot be proposed. Also data profiles I) and III) cannot be proposed for power-budget reasons.

According to the method of the invention, data are transmitted in the above mentioned field A (that is enabling only the field S and the field A), reaching the target to reduce the power consumption required for the transmission of radiofrequency signals, disabling the field B which has no data content.

In other words, the method according to the invention foresees the creation of a new data profile with a specific set-up definitely excluding the field B (that is without determining the enabling of radio equipment during the transmission of this field), but continuing to enjoy the benefits deriving from the protected transmission, thanks to the presence of the CRC sub-field of field A.

The new set-up - called for instance "low speed set-up" is characterized by data transmission on field A, where only fields S+A are enabled (including the CRC field).

In other words, the method according to the invention consists in assigning a specific coding to said "low speed set-up" which is allocated in the sub-field H of field A. The emission of a low speed set-up by the PP, may be considered as a request to the RFP station to which said PP is connected of a new type of set-up (that is presently not provided for by the DECT standard) showing given characteristics, that is request for a physical channel, characterized by the enabling of fields S and A only.

The RFP, in response to the detection of said specific coding in said sub-field H of field A, establishes a communication with the portable part PP which transmits only in fields S and A (i.e. the transmitters are not activated during B field transmission).

The method according to the invention enables to reduce the power required for the transmission by more than 70%.

In fact, as shown always in fig. 2, a DECT time slot includes 32 bits in the field S, 64 bits in the field A and 324 bits in the field B, in addition to the above mentioned 4 additional bits in the CRC field.

Not transmitting the 320 bits of the field B, that is not enabling the radio equipment during the transmission of the field B, a power save equal to 324/420, that is 77% approx. is obtained in power budget terms.

The invention results therefore being highly advantageous in all the applications where the main constraint is represented by the reduced availability of power. In addition to the above mentioned power saving, saving of the power related to the processing (at the PP and RFP) of data "potentially" present on the field B has to be considered, which as referred to above is enabled even in idle condition according to the known solutions of the DECT standard.

In fact, since the field B foreseen by the standard to establish a data transmission in the connection oriented modality foresees the presence of no. 4 sub-fields and of a same quantity of CRC fields, also the use of a sole sub-field involves the processing of the four CRC fields.

According to an additional embodiment (not shown in detail) power consumption can be more minimized, periodically enabling (for instance every 2 hours) the portable parts PP and perform a data transmission ending with the transmission, for instance, of a message indicating the fact that the transmission will be restarted after a pre-set time. In this way only a clock is supplied, while the remaining part of the circuitry is kept unsupplied. The output of the supply should be restarted only after the above mentioned pre-set time is elapsed.

It is evident from the above how the invention enable to transform equipment complying with the DECT standard (not falling under the "low power" class) into low power like equipment maintaining the advantages related to a connection oriented data transmission.

To give a range of magnitude we point out that low power consumption equipment are considered those characterized by a mono-directional transmission, such as for instance remote controls, etc.

The invention is fully compatible with the common functions of the DECT system, that is with the transmission of voice signals as specified below, referring also to figure 3.

In fact, when one wants to establish a telephone call through the DECT system, the concerned person will use a portable part PP suitable to emit a set-up request of the type generally foreseen to establish a voice communication. In other words in this case, in said sub-field H a specific coding shall be allocated, which translates into the request to the RFP station to which said PP is connected for a set-up showing the usual characteristics, that is a request for a physical channel characterized by the enabling of all the fields, that is of fields S, A, and B.

In this way some portable parts PP can perform a low speed data transmission with the above mentioned advantages referring to the low power consumption, while other portable parts PP (connected or not to the same RFP) can be used to transmit voice signal in a completely conventional way.

Fig. 3 outlines a "data exchange/data collection" system availing of the invention in order to establish a local geographical connection system, according to the DECT standard, aimed at bi-directional transport of data and voice communications between fixed peripheral units or mobile peripheral units and one (or more) Control/Supervision Centers.

Field sizes (analogue and/or digital) are detected through appropriate Sensors; measurements made and conditions detected are acquired by a local Data Logger.

A multiplexer takes care of the multiplexing of all data logged in a unique data flow launched through the PP unit in the DECT system scope of the invention.

Through RFP and CCFP, and subsequently, possibly via switched telephone network, total data consisting of data and voice reach the Control/Supervision Center to enable the total management of the data exchange/data collection system.

The bi-directionality of the connection enables also to re-launch data from the center to the periphery in order to perform control operations of the same, enabling for instance regulation elements through actuators.

This system can find several applications, in particular where the control of fixed or mobile peripheral units is foreseen by a central unit on local geographical areas (for instance in the urban context, inside buildings, etc.) and in particular in the cases where the peripheral unit is local battery supplied, and therefore with very low power available.

It is pointed out that the subject territorial telematic systems involve in general low speed type data transmissions, consistently with the basic method of the invention.

The attention is drawn also on the fact that the data exchange/data collection system can integrate, besides connections for data transmission, also connections of PP units for telephone communications making reference to the compatibility of the low speed data transmission with the usual operation methods of the DECT.

Therefore, while a particular' embodiment of the present invention has been shown and described, it should be understood that the present invention is not limited thereto since other embodiments may be made by those skilled in the art without departing from the scope thereof. It is thus contemplated that the present invention encompasses any and all such embodiments covered by the following claims.

In particular the present invention extends to cover any data exchange/data collection application foreseeing the use of the DECT standard and requiring fixed or mobile low power consumption peripheral stations and therefore with local battery supply.

## Claims

1. Method for the low speed transmission of data in the connection oriented modality in a DECT system including at least one radio fixed part (RFP) and at least one portable part (PP) in which data transmission is organized in frames having pre-set duration in which a pre-set number of time slots are allocated, each of said time slots including:
a first field (S) including useful data for the clock and phase recovery;
a second field (A) for the signalling transmission,
a third field (B) for payload transmission,
said second field (A) including in its turn the following sub-fields:
a first sub-field (H) consisting of an identification coding of the content of a second subsequent sub-field (T);
a second sub-field (T) where one of a pre-set number of logic channels is allocated;
a third sub-field (CRC) containing bits for the cyclic redundancy code,
said method being **characterized in that** it transmits data in said second field (A), disabling at the same time said third field (B);

2. Method according to claim 1, **characterized in that** it foresees the following steps:
creating a new data profile relevant to a connection oriented data transmission adapted to enable said first field (S) and said second field(A) only;
creating a specific set-up of said new profile and assigning it a specific coding to be allocated in said first sub-field (H) of the second field (A);
supplying at said at least one portable part (PP) said specific coding assigned to said specific set-up;
detecting, by said at least one radio fixed part (RFP), said specific coding assigned to said specific set-up;
establishing a data transmission between said at least one portable part and said at least one radio fixed part (RFP) enabling only said first (S) and second(A) field of each time slot.

3. Method according to the previous claims, **characterized in that** said data transmission terminates with the transmission of a message giving a command for the re-start of transmission operations after a time interval of pre-set duration and **in that** a clock is associated to said at least one peripheral unit.

4. A system for the low speed transmission of data in the connection oriented modality including at least one radio fixed part (RFP) and at least one portable part (PP) in which data transmission is organized in frames having pre-set duration in which a pre-set number of time slots are allocated, each of said time slots including:
a first field (S) including useful data for the clock and phase recovery;
a second field (A) for the signalling transmission,
a third field (B) for payload transmission,
said second field (A) including in its turn the following sub-fields:
a first sub-field (H) consisting of an identification coding of the content of a second subsequent sub-field (T);
a second sub-field (T) where one of a pre-set number of logic channels is allocated;
a third sub-field (CRC) containing bits for the cyclic redundancy code,
said system being **characterized in that** it includes means adapted to transmit data in said second field (A), disabling at the same time said third field (B).

5. A system according to claim 4, **characterized in that** data are transmitted in said second field (A) after creation of a specific data profile relevant to a connection oriented data transmission, to which a specific coding allocated in said first sub-field (S) is assigned.

6. A system according to claim 5, **characterized in that** said at least one portable part (PP) includes means suitable to emit said specific coding assigned to said specific data profile and **in that** said at least one radio fixed part (RFP) includes means suitable to detect said specific coding and enable radio equipment only during the transmission of said first and second fields (S and A) in response to said detection.

7. A data exchange/data collection system adapted to collect and to exchange data emitted by fixed or mobile peripheral units and for the enabling of pre-set functions in relation to the value of a code emitted by peripheral units, **characterized in that** is implemented using the system of claim 4.

8. A data exchange/data collection system according to claim 7, in which said DECT system includes also:
- a transcoder battery (TRAS) to which said at least one radio fixed part (RFP) is connected;
- a central control fixed part (CCFP) connected to a switching network,
**characterized in that**
said portable part (PP) includes at least a sensor suitable to supply data on one or more parameters and/or an actuator for the enabling of pre-set functions;
a data collection unit (CONTROL/SUPERVISORY CENTER) is connected to said switching network.

9. A data exchange/data collection system according to claim 8, **characterized in that** said data collection unit is a personal computer.

10. A data exchange/data collection system according to claim 7, **characterized in that** data are transmitted in said second field (A) after creation of a specific data profile relevant to a connection oriented data transmission, to which a specific coding allocated in said first sub-field (S) is assigned.

11. A data exchange/data collection system according to claim 10, **characterized in that** said at least one peripheral unit (PP) includes means suitable to emit said specific coding assigned to said specific data profile and **in that** said at least one radio fixed part (RFP) includes means suitable to detect said specific coding and to enable radio equipment only during the transmission of said first and second field (S and A) in response to the above mentioned detection.

## Patentansprüche

1. Verfahren für die langsame Datenübertragung in einem DECT-System, das aus zumindest einer Basisstation und einer Peripherieeinheit besteht und in dem Daten in Rahmen einer vorgegebenen Länge übertragen werden. Diesen Rahmen ist eine bestimmte Anzahl von Zeitschlitzen zugeordnet, von denen jeder die folgenden Felder enthält:
ein erstes Feld mit Takt- und Phasendaten;
ein zweites Feld für die Signalübertragung;
ein drittes Feld für die Payload-Übertragung,
wobei das zweite Feld (A) selbst die folgenden Teilfelder enthält:
ein erstes Teilfeld (H) mit einer Identifikations-Codierung für den Inhalt eines folgenden zweiten Teilfelds (T);
ein zweites Teilfeld (T), dem ein Kanal aus einer vorgegebenen Anzahl logischer Kanäle zugewiesen wird;
ein drittes Teilfeld (CRC) mit Bits für die zyklische Redundanzprüfen,
wobei das beschriebene Verfahren Daten in besagtem zweiten Feld (A) überträgt und gleichzeitig das besagte dritte Feld (B) deaktiviert;

2. Verfahren nach Schutzanspruch 1 mit folgenden Schritten:
Erstellung eines neuen Datenprofils für eine verbindungsbezogene Datenübertragung, das nur das erste (S) und zweite Feld (A) aktiviert;
Erstellung einer speziellen Konfiguration für dieses neue Profil und Zuweisung einer speziellen Codierung, die an das erste Teilfeld (H) des zweiten Felds (A) übergeben wird;
Bereitstellung der Codierung für die spezielle Konfiguration an zumindest einem Mobilteil;
Erkennung der Codierung für die spezielle Konfiguration an zumindest einer Basisstation;
Herstellung einer Datenverbindung zwischen mindestens einem Mobilteil und mindestens einer Basisstation, bei der ausschließlich das erste (S) und zweite (A) Feld jedes Zeitschlitzes aktiviert werden.

3. Verfahren entsprechend den vorherigen Schutzansprüchen, wobei die Datenübertragung mit einer Nachricht endet, die ein Kommando für den Neustart der Übertragung nach einem Zeitintervall vorgegebener Länge enthält und in der mindestens einer Peripherieeinheit ein Takt zugeordnet wird.

4. Ein System für die verbindungsbezogene, langsame Datenübertragung, das zumindest aus einer Basisstation und einem Mobilteil besteht und in dem Daten in Rahmen einer vorgegebenen Länge übertragen werden. Diesen Rahmen ist eine bestimmte Anzahl von Zeitschlitzen zugeordnet, von denen jeder die folgenden Felder enthält:
ein erstes Feld mit Takt- und Phasendaten;
ein zweites Feld für die Signalübertragung,
ein drittes Feld für die Payload-Übertragung,
wobei das zweite Feld (A) selbst die folgenden Teilfelder enthält:
ein erstes Teilfeld (H) mit einer Identifikationscodierung für den Inhalt eines folgenden zweiten Teilfelds (T);
ein zweites Teilfeld (T), dem ein Kanal aus einer vorgegebenen Anzahl logischer Kanäle zugewiesen wird;
ein drittes Teilfeld (CRC) mit Bits für die zyklische Redundanzprüfung,
wobei dieses System für die Übertragung der Daten in diesem zweiten Feld (A) eingerichtet ist und gleichzeitig das dritte Feld (B) deaktiviert.

5. Ein System nach Schutzanspruch 4, das Daten in besagtem zweiten Feld (A) überträgt, nachdem ein spezielles Datenprofil für eine verbindungsbezogene Datenübertragung erstellt worden ist, dem in besagtem ersten Teilfeld (S) eine spezielle Codierung zugewiesen wird.

6. Ein System nach Schutzanspruch 5, in dem mindestens ein Mobilteil die dem speziellen Datenprofil zugeordnete spezielle Codierung aussenden kann und in dem mindestens eine Basisstation diese spezielle Codierung erkennen kann. Außerdem wird die Funkausrüstung aufgrund dieser Erkennung ausschließlich während der Übertragung des ersten und zweiten Felds (S und A) aktiviert.

7. Ein Datenaustausch-/Datenerfassungssystem, das für die Erfassung und den Austausch von Daten vorgesehen ist, die von fest installierten oder mobilen Peripherieeinheiten ausgesandt werden, und das abhängig von dem Wert einer von den Peripherieeinheiten ausgesandten Codierung bestimmte Funktionen aktivieren kann. Die Realisierung erfolgt unter Verwendung des Systems aus Schutzanspruch 4.

8. Ein Datenaustausch-/Datenerfassungssystem nach Schutzanspruch 7, in dem das besagte DECT-System ebenfalls die folgenden Bestandteile enthält:
- eine Transcoder-Batterie (TRAS), mit der mindestens eine Basisstation verbunden ist;
- eine zentrale Steuereinheit (CCFP), die mit einem Koppelnetz verbunden ist, wobei
das besagte Mobilteil mindestens einen Sensor enthält, der Daten zu einem oder mehreren Parametern und/oder zu einem Stellglied liefern kann, so dass bestimmte vorgegebene Funktionen ausgelöst werden können;
eine Datenerfassungseinheit (KONTROLL-/ÜBERWACHUNGSZENTRALE) mit diesem Koppelnetz verbunden ist.

9. Ein Datenaustausch-/Datenerfassungssystem nach Schutzanspruch 8, in dem als Datenerfassungseinheit einen Personal Computer eingesetzt wird.

10. Ein Datenaustausch-/Datenerfassungssystem nach Schutzanspruch 7, dass die Daten in besagtem zweiten Feld (A) überträgt, nachdem ein spezielles Datenprofil für eine verbindungsbezogene Datenübertragung erstellt und diesem in besagtem erstem Teilfeld (S) eine spezielle Codierung zugewiesen wurde.

11. Ein Datenaustausch-/Datenerfassungssystem nach Schutzanspruch 10, in dem mindestens ein Mobilteil die dem speziellen Datenprofil zugeordnete spezielle Codierung aussenden kann und in dem mindestens eine Basisstation diese spezielle Codierung erkennen kann. Außerdem wird die Funkausrüstung aufgrund dieser Erkennung ausschließlich während der Übertragung des ersten und zweiten Felds (S und A) aktiviert.

## Revendications

1. Procédé de transmission de données à basse vitesse dans la modalité connectée dans un système DECT comprenant au moins un élément radio fixe (RFP) et au moins un élément portable (PP) dans lequel la transmission des données est organisée en trames ayant une durée prédéfinie dans lesquelles un nombre prédéfini de tranches de temps sont allouées, chacune desdites tranches de temps comprenant :
un premier champ (S) comprenant des données utiles pour la récupération du signal d'horloge et de la phase ;
un deuxième champ (A) pour la transmission de signalisation ;
un troisième champ (B) pour la transmission de la charge utile ;
ledit deuxième champ (A) comprenant à son tour les sous-champs suivants :
un premier sous-champ (H) consistant en un codage d'identification du contenu d'un deuxième sous-champ (T) qui le suit ;
un deuxième sous-champ (T) où l'une parmi un nombre prédéfini de voies logiques est allouée ;
un troisième sous-champ (CRC) contenant des bits pour le code à redondance cyclique,
ledit procédé étant **caractérisé en ce qu'**il transmet des données dans ledit deuxième champ (A), inactivant dans le même temps ledit troisième champ (B).

2. Procédé selon la revendication 1, **caractérisé en qu'**il prévoit les étapes suivantes :
créer un nouveau profil de données se rapportant à une transmission de données avec connexion adaptée pour activer ledit premier champ (S) et ledit deuxième champ (A) seulement ;
créer un établissement spécifique dudit nouveau profil et lui assigner un codage spécifique à allouer dans ledit premier sous-champ (H) du deuxième champ (A) ;
fournir audit au moins un élément portable (PP) ledit codage spécifique assigné audit établissement spécifique ;
détecter, par ledit au moins un élément radio fixe (RFP), ledit codage spécifique assigné audit établissement spécifique ;
établir une transmission de données entre ledit au moins un élément portable et ledit au moins un élément radio fixe (RFP) en activant seulement lesdits premier (S) et deuxième (A) champs de chaque tranche de temps.

3. Procédé selon les revendications précédentes, **caractérisé en ce que** ladite transmission de données se termine par la transmission d'un message donnant une commande pour recommencer les opérations de transmission après un intervalle de temps de durée prédéfinie et **en ce qu'**une horloge est associée à ladite au moins une unité périphérique.

4. Système de transmission de données à basse vitesse dans la modalité connectée comprenant au moins un élément radio fixe (RFP) et au moins un élément portable (PP) dans lequel la transmission de données est organisée en trames ayant une durée prédéfinie dans lesquelles un nombre prédéfini de tranches de temps sont allouées, chacune desdites tranches de temps comprenant :
un premier champ (S) comprenant des données utiles pour la récupération du signal d'horloge et de la phase ;
un deuxième champ (A) pour la transmission de signalisation ;
un troisième champ (B) pour la transmission de la charge utile ;
ledit deuxième champ (A) comprenant à son tour les sous-champs suivants :
un premier sous-champ (H) consistant en un codage d'identification du contenu d'un deuxième sous-champ (T) qui le suit ;
un deuxième sous-champ (T) où l'une parmi un nombre prédéfini de voies logiques est allouée ;
un troisième sous-champ (CRC) contenant des bits pour le code à redondance cyclique,
ledit système étant **caractérisé en ce qu'**il comprend des moyens adaptés pour transmettre des données dans ledit deuxième champ (A), inactivant en même temps ledit troisième champ (B).

5. Système selon la revendication 4, **caractérisé en ce que** les données sont transmises dans ledit deuxième champ (A) après la création d'un profil de données spécifique se rapportant à une transmission de données avec connexion, auquel un codage spécifique alloué dans ledit premier sous-champ (S) est assigné.

6. Système selon la revendication 5, **caractérisé en ce que** ledit au moins un élément portable (PP) comprend des moyens convenant pour émettre ledit codage spécifique assigné audit profil de données spécifique et **en ce que** ledit au moins un élément radio fixe (RFP) comprend des moyens convenant pour détecter ledit codage spécifique et activer l'équipement radio uniquement pendant la transmission desdits premier et deuxième champs (S et A) en réaction à ladite détection.

7. Système d'échange et de collecte de données adapté pour collecter et échanger des données émises par des unités périphériques fixes ou mobiles et pour activer les fonctions prédéfinies en relation avec la valeur d'un code émis par des unités périphériques, **caractérisé en ce qu'**il est mis en oeuvre en utilisant le système de la revendication 4.

8. Système d'échange et de collecte de données selon la revendication 7, dans lequel ledit système DECT comprend également :
- une batterie de transcodeurs (TRAS) à laquelle ledit au moins un élément radio fixe (RFP) est connecté ;
- un élément fixe de commande centrale (CCFP) connecté à un réseau commuté,
**caractérisé en ce que**
ledit élément portable (PP) comprend au moins un capteur convenant pour fournir des données sur un ou plusieurs paramètres et/ou un actionneur pour l'activation des fonctions prédéfinies ;
une unité de collecte de données (CENTRE DE COMMANDE/SUPERVISION) est connectée audit réseau commuté.

9. Système d'échange et de collecte de données selon la revendication 8, **caractérisé en ce que** ladite unité de collecte de données est un ordinateur personnel.

10. Système d'échange et de collecte de données selon la revendication 7, **caractérisé en ce que** les données sont transmises dans ledit deuxième champ (A) après la création d'un profil de données spécifique se rapportant à une transmission de données avec connexion, auquel un codage spécifique alloué dans ledit premier sous-champ (S) est assigné.

11. Système d'échange et de collecte de données selon la revendication 10, **caractérisé en ce que** ladite au moins une unité périphérique (PP) comprend des moyens convenant pour émettre ledit codage spécifique assigné audit profil de données spécifique et **en ce que** ledit au moins un élément radio fixe (RFP) comprend des moyens convenant pour détecter ledit codage spécifique et pour activer l'équipement radio uniquement durant la transmission desdits premier et deuxième champs (S et A) en réaction à la détection précitée.
